# EUROPEAN PATENT APPLICATION

(11) **EP 4 611 352 A1**
(43) Date of publication of application: **03.09.2025**
(21) Application number: 24766172.1
(22) Date of filing: 08.01.2024
(51) Int. Cl.: H04L 69/08

(54) **BUILDING PROTOCOL DATA PROCESSING METHOD, APPARATUS, AND SYSTEM**

(30) Priority: 07.03.2023 CN 202310217638
(71) Applicant: Shanghai Kong Intelligent Building Co., Ltd, Shanghai 200080 (CN); GD Kong Intelligent Building Co., Ltd., Foshan, Guangdong 528311 (CN)
(72) Inventor: MAO, Zhili, Shanghai 200080 (CN); LIAO, Nanhai, Shanghai 200080 (CN)
(74) Representative: RGTH
(86) International application number: PCT/CN2024/071164
(87) International publication number: WO 2024/183449

(57) **Abstract**

Provided are a building protocol data processing method, apparatus and system, a computer-readable storage medium, a computer program product, and a computer program. The method is applied to a protocol building controller. The protocol building controller is connected to at least one upper-layer application through an MQTT server, and further connected to at least one BACnet device. The method includes: receiving first Bip2JSON protocol data sent by a target upper-layer application through the MQTT server, where the first Bip2JSON protocol data is a JSON format text carrying a first request operation; converting the first Bip2JSON protocol data to BACnet protocol data; and performing a function response corresponding to the first request operation based on the BACnet protocol data.

## Description

### CROSS-REFERENCE TO RELATED APPLICATION

This application claims priority to Chinese Patent Application No. 202310217638. X filed in China on March 7, 2023, the entire contents of which are incorporated herein by reference.

### FIELD

The present disclosure relates to the field of communication technology, and more particularly to a building protocol data processing method, apparatus, and system, a computer-readable storage medium, a computer program product, and a computer program.

### BACKGROUND

With the development of information technology, intelligent functions in buildings are constantly enhanced. It is inevitable that multiple intelligent devices from different suppliers are used in a same building. The multiple intelligent devices from various manufacturers may have different communication protocols, which brings a lot of inconvenience to unified management.

When a building is renovated for an air conditioning system, a hot and cold water system, a lighting system, etc., renovation mainly involves temperature and humidity control, water treatment, and lighting system on/off control, etc. Since the intelligent devices to be renovated are of many types and dispersedly distributed, and communication protocols of the multiple intelligent devices are different from each other, it is difficult to aggregate data of all intelligent devices for an entire building and perform the unified management.

Therefore, development of a building protocol data processing method, an apparatus, a system, a computer-readable storage medium, a computer program product, and a computer program capable of performing the unified management is required.

### SUMMARY

An object of the present disclosure is to provide a building protocol data processing method, an apparatus, a system, a computer-readable storage medium, a computer program product, and a computer program for implementing a function response corresponding to a requested operation in building protocol data by performing protocol conversion on Bip2JSON protocol data in a JSON format.

In a first aspect, an embodiment of the present disclosure provides a building protocol data processing method. The method is applied to a protocol building controller. The protocol building controller is connected to at least one upper-layer application through an MQTT server, and further connected to at least one BACnet device. The method comprises: receiving first Bip2JSON protocol data sent by a target upper-layer application through the MQTT server, the first Bip2JSON protocol data being a JSON format text carrying a first request operation, a request application identifier, a target device identifier, and first point information; converting the first Bip2JSON protocol data to BACnet protocol data; and performing a function response corresponding to the first request operation based on the BACnet protocol data.

In an embodiment of the present disclosure, said converting the first Bip2JSON protocol data to the BACnet protocol data comprises: determining APDU application layer data based on the first request operation and the first point information in the first Bip2JSON protocol data; determining NPDU network layer data and BVLC virtual link control information based on the target device identifier in the first Bip2JSON protocol data and network layer information corresponding to the target device identifier; and determining the BACnet protocol data based on the APDU application layer data, the NPDU network layer data, and the BVLC virtual link control information.

In an embodiment of the present disclosure, said performing the function response corresponding to the first request operation based on the BACnet protocol data comprises: in response to a target device corresponding to the target device identifier being a third-party BACnet device, sending the BACnet protocol data to the third-party BACnet device, to enable the third-party BACnet device to perform a function response corresponding to the first request operation based on the BACnet protocol data; and in response to the target device corresponding to the target device identifier being a virtual BACnet device corresponding to a private protocol proxy, performing the function response corresponding to the first request operation based on the BACnet protocol data.

In an embodiment of the present disclosure, the protocol building controller caches device data respectively corresponding to a plurality of device identifiers, and said performing the function response corresponding to the first request operation based on the BACnet protocol data comprises: in response to the first request operation in the BACnet protocol data being an information obtaining operation, searching for target device data corresponding to the target device identifier from the device data respectively corresponding to the plurality of device identifiers, and performing a response based on the target device data, the information obtaining operation comprising one of the following: searching for a bacnet device in a network, obtaining a point list of the device, reading a point property of the device, and subscribing to a point change of the device; and in response to the first request operation in the BACnet protocol data being a device control operation, sending a control instruction to a target virtual BACnet device corresponding to the target device identifier based on the BACnet protocol data, to enable the target virtual BACnet device to perform a function response corresponding to the control instruction, the device control operation comprising writing the point property of the device.

In an embodiment of the present disclosure, the device data corresponding to each of the device identifier is updated by: receiving second Bip2JSON protocol data sent by the private protocol proxy, the second Bip2JSON protocol data being a JSON text that carries a request device identifier and a second request operation and is obtained by the private protocol proxy converting private protocol data of the virtual BACnet device; and updating device data of the virtual BACnet device corresponding to the request device identifier based on the second request operation, the second request operation comprising one of the following: adding the virtual BACnet device, deleting the virtual BACnet device, adding a point in the virtual BACnet device, updating the point in the virtual BACnet device, and deleting the point in the virtual BACnet device.

In an embodiment of the present disclosure, the device data comprises basic information and data information. The basic information comprises a BACnet device identifier and BACnet point information. The data information comprises a point current value and a point state.

In an embodiment of the present disclosure, the private proxy comprises at least one of an Modbus protocol proxy, a Zigbee protocol proxy, and a KNX protocol proxy. The virtual BACnet device comprises at least one of an Modbus device, a Zigbee device, and a KNX device.

In an embodiment of the present disclosure, the upper-layer application comprises at least one of a third-party application, a Web application, a configuration application, and a protocol forwarding proxy.

In a second aspect, an embodiment of the present disclosure further provides a building protocol data processing apparatus. The apparatus is applied to a protocol building controller. The protocol building controller is connected to at least one upper-layer application through an MQTT server, and further connected to at least one BACnet device. The apparatus comprises: a protocol receiving module configured to receive first Bip2JSON protocol data sent by a target upper-layer application through the MQTT server, the first Bip2JSON protocol data being a JSON format text carrying a first request operation, a request application identifier, a target device identifier, and first point information; a protocol conversion module configured to convert the first Bip2JSON protocol data to BACnet protocol data; and a function response module configured to perform a function response corresponding to the first request operation based on the BACnet protocol data.

In a third aspect, an embodiment of the present disclosure further provides a building protocol data processing system. The system comprises a protocol building controller, an MQTT server, and at least one BACnet device. The protocol building controller is connected to at least one upper-layer application through the MQTT server. The protocol building controller is further connected to the at least one BACnet device. The protocol building controller is configured to perform the building protocol data processing method according to any one of the embodiments of the first aspect.

In a fourth aspect, an embodiment of the present disclosure further provides a computer-readable storage medium having computer-executable instructions. The computer-executable instructions, when called and executed by a processor, cause the processor to implement the building protocol data processing method according to any one of the embodiments of the first aspect.

In a fifth aspect, an embodiment of the present disclosure further provides a computer program product comprising a computer program. The computer program, when executed by a processor, implements the building protocol data processing method according to any one of the embodiments of the first aspect.

In a sixth aspect, an embodiment of the present disclosure further provides a computer program comprising computer program code. The computer program code, when executed on a computer, causes the computer to implement the building protocol data processing method according to any one of the embodiments of the first aspect.

In the building protocol data processing method, apparatus, system, computer-readable storage medium, computer program product, and computer program provided by the embodiments of the present disclosure, the method is applied to the protocol building controller. The protocol building controller is connected to the at least one upper-layer application through the MQTT server, and further connected to the at least one BACnet device. The method comprises: receiving the first Bip2JSON protocol data sent by the target upper-layer application through the MQTT server, the first Bip2JSON protocol data being the JSON format text carrying the first request operation, the request application identifier, the target device identifier, and the first point information; converting the first Bip2JSON protocol data to the BACnet protocol data; and performing the function response corresponding to the first request operation based on the BACnet protocol data. The embodiments of the present disclosure implement the function response corresponding to the request operation in the building protocol data by performing the protocol conversion on the Bip2JSON protocol data in the JSON format, providing a unified way for processing multiple protocols in a building system, and reducing difficulty of accessing the BACnet protocol to facilitate secondary development. As a result, convenient connection between internet applications and building information is realized.

### BRIEF DESCRIPTION OF THE DRAWINGS

In order to clearly explain technical solutions according to embodiments of the present disclosure or in the related art, drawings used in the description of the embodiments or the related art are briefly described below. Obviously, the drawings as described below are merely some embodiments of the present disclosure. Based on these drawings, other drawings can be obtained by those skilled in the art without creative effort.
FIG. 1 is a flowchart of a building protocol data processing method according to an embodiment of the present disclosure.
FIG. 2 is a schematic diagram of a building protocol data processing process according to an embodiment of the present disclosure.
FIG. 3 is a schematic diagram of another building protocol data processing process according to another embodiment of the present disclosure.
FIG. 4 is a schematic diagram of a building protocol data processing system according to an embodiment of the present disclosure.
FIG. 5 is a schematic diagram of a building protocol data processing interface according to an embodiment of the present disclosure.
FIG. 6 is a structural block diagram of a building protocol data processing apparatus according to an embodiment of the present disclosure.
FIG. 7 is a schematic structural diagram of a building protocol data processing system according to an embodiment of the present disclosure.

### DETAILED DESCRIPTION

Technical solutions of the present disclosure will be described clearly and completely below in combination with the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

In the related art, a management approach for multiple protocols in a building system involves unifying the multiple protocols into a BACnet protocol, that is, communication for an intelligent building system is performed through the BACnet protocol, which is a communication protocol defined by International Organization for Standardization (ISO) and American Society of Heating, Refrigerating and Air-Conditioning Engineers (ASHRAE). The BACnet protocol is designed for heating, ventilation, air conditioning, and refrigeration control equipment, and also provides a basic principle for integration of other building control systems (such as lighting, security, fire protection, and other systems).

However, the BACnet protocol has some shortcomings. Firstly, the protocol has a complex structure and high access difficulty, and protocol information can only be obtained through a BACnet client. Secondly, a BACnet application layer APDU has poor readability, leading to high complexity in secondary development and an inability to achieve a "what-you-see-is-what-you-get" effect. Thirdly, the BACnet protocol exhibits poor interoperability with internet applications, and a controller cannot be directly operated through web applications, which is not suitable for needs of modern applications.

Based on this, embodiments of the present disclosure provide a building protocol data processing method, apparatus, and system, a computer-readable storage medium, a computer program product, and a computer program, which implement a function response corresponding to a request operation in building protocol data by performing protocol conversion on Bip2JSON protocol data in a JSON format. This provides a unified way for processing multiple protocols in a building system, and reduces difficulty of accessing the BACnet protocol to facilitate the secondary development. As a result, convenient connection between internet applications and building information is realized.

In order to facilitate understanding of this embodiment, a building protocol data processing method disclosed in the embodiments of the present disclosure is first described in detail.

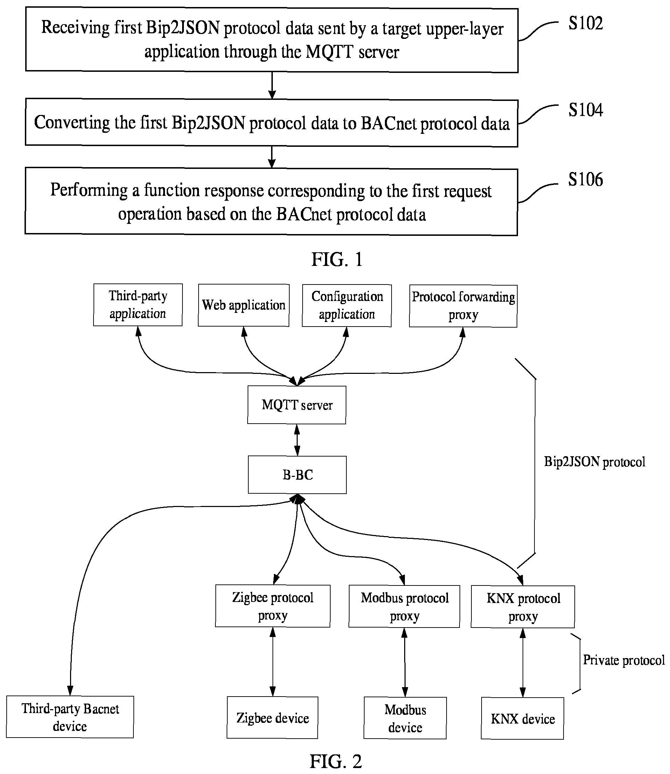

FIG. 1 is a flowchart of the building protocol data processing method according to the embodiments of the present disclosure. The method is applied to a protocol building controller. The protocol building controller is connected to at least one upper-layer application through an MQTT server. The upper-layer application connected to the protocol building controller through the MQTT server comprises at least one of a third-party application, a Web application, a configuration application, and a protocol forwarding proxy. The protocol building controller is further connected to at least one BACnet device. The BACnet device here may be a third-party BACnet device or a virtual BACnet device corresponding to a private protocol proxy. The private protocol proxy comprises at least one of an Modbus protocol proxy, a Zigbee protocol proxy, and a KNX protocol proxy. The virtual BACnet device comprises at least one of an Modbus device, a Zigbee device, and a KNX device. The method specifically comprises block S102 to block S106.

At block S102, first Bip2JSON protocol data sent by a target upper-layer application through the MQTT server is received. The first Bip2JSON protocol data is a JSON format text carrying a first request operation, a request application identifier, a target device identifier, and first point information.

The first request operation may be a request for the target upper- layer application to obtain device data of a target device corresponding to the target device identifier, or may be a request for the target upper-layer application to control the target device corresponding to the target device identifier to perform a certain action. The request application identifier is an identifier corresponding to the target upper-layer application that initiates the request.

The first Bip2JSON protocol data is the JSON format text, with JSON as a data carrier, which is highly readable and easy for secondary development. The protocol conversion method combines multiple capabilities of the BACnet protocol, comprising an ability to automatically discover devices, an ability to obtain services provided by the devices, and an ability to read and write device objects and properties.

At block S104, the first Bip2JSON protocol data is converted to BACnet protocol data.

The specific protocol conversion process can be performed based on format characteristics of two protocols themselves. For example, the corresponding data is extracted from the first Bip2JSON protocol data and converted to APDU application layer data, NPDU network layer data, and BVLC virtual link control information corresponding to the BACnet protocol to obtain the BACnet protocol data.

At block S106, a function response corresponding to the first request operation is preformed based on the BACnet protocol data.

In response to a target device corresponding to the target device identifier being a third-party BACnet device, the BACnet protocol data is sent to the third-party BACnet device, to enable the third-party BACnet device to perform the function response corresponding to the first request operation based on the BACnet protocol data.

In response to the target device corresponding to the target device identifier being a virtual BACnet device corresponding to the private protocol proxy, the function response corresponding to the first request operation is performed by the protocol building controller based on the BACnet protocol data.

The building protocol data processing method provided in the embodiments of the present disclosure is applied to the protocol building controller. The protocol building controller is connected to the at least one upper-layer application through the MQTT server, and further connected to the at least one BACnet device. The method comprises: receiving the first Bip2JSON protocol data sent by the target upper-layer application through the MQTT server, where the first Bip2JSON protocol data is the JSON format text carrying the first request operation, the request application identifier, the target device identifier, and the first point information; converting the Bip2JSON protocol data to the BACnet protocol data; and performing the function response corresponding to the first request operation based on the BACnet protocol data. In the embodiments of the present disclosure, the function response corresponding to the request operation in the building protocol data is implemented by performing the protocol conversion on the Bip2JSON protocol data in the JSON format. This provides a unified way to process the multiple protocols in the building system, and reduces the difficulty of accessing the BACnet protocol to facilitate secondary development. As a result, the convenient connection between the internet applications and the building information is realized.

An embodiment of the present disclosure further provides another building protocol data processing method, and the method is implemented on a basis of the above-mentioned embodiments. This embodiment focuses on describing a protocol conversion process and a request response process.

Composition of the BIP2JSON protocol data is as follows:
1. op: operations of a current request, which can be whois (search for a BACnet device), readprop (read a point property), writeprop (write the point property), and other operations;
2.seq: a sequence number (positive integer) of the current request, which is used to mark a reply frame from a server side;
3. callerId: an Id of a requester of the request, which is used to mark a source of the request, facilitating the server to send the reply frame to a correct recipient;
4. device: a BACnet device number for which the current request is targeted;
5. prop: a BACnet attribute number for which the current request is targeted;
6. data: BACnet point information for which the current request is targeted, comprising a point address and a point type.

For example: a target is to read information of a current value (85) of a point with an address 65 and a type 1 on a device 77030;
Then a client sends:
   {"op": "readprop", "seq":998, "callerId" :235, "device" :77030, "prop": 85, "array Index" : -1,"data":[{"type":1,"instance":65}]};
The protocol building controller returns:
   {"op":"readprop","ack":1,"seq":998,"callerId":235,"tokenId":1228,"device":77030, "data":[{"type":1,"instance":65,"prop":85,"value":11}],"timeStamp":1639862034}.

Based on a required device and point information, the target upper-layer application packages the BIP2JSON protocol data according to the above protocol data structure, and sends the data to the protocol building controller through the MQTT client.

The specific process of the protocol building controller converting the first Bip2JSON protocol data to the BACnet protocol data comprises: (1) determining APDU application layer data based on the first request operation and the first point information in the first Bip2JSON protocol data; (2) determining NPDU network layer data and BVLC virtual link control information based on the target device identifier in the first Bip2JSON protocol data and network layer information corresponding to the target device identifier; and (3) determining the BACnet protocol data based on the APDU application layer data, the NPDU network layer data, and the BVLC virtual link control information.

The step for the protocol building controller to perform the function response corresponding to the first request operation based on the BACnet protocol data comprise the following two scenarios.

Scenario 1, in response to the target device corresponding to the target device identifier being the third-party BACnet device, the BACnet protocol data is sent to the third-party BACnet device, to enable the third-party BACnet device to perform the function response corresponding to the first request operation based on the BACnet protocol data. That is, when the target device is the third-party BACnet device, the BACnet protocol data needs to be sent to the third-party BACnet device, and a specific response process is completed by the third-party BACnet device.

Scenario 2: in response to the target device corresponding to the target device identifier being the virtual BACnet device corresponding to the private protocol proxy, the function response corresponding to the first request operation is performed by the protocol building controller based on the BACnet protocol data.

In specific implementation, the protocol building controller caches device data respectively corresponding to a plurality of device identifiers. For example, it caches the device data corresponding to the Modbus device, the Zigbee device, and the KNX device respectively. The device data comprises basic information and data information. The basic information comprises a BACnet device identifier and BACnet point information. The data information comprises a point current value and a point state.

For the scenario where the target device is the virtual BACnet device corresponding to the private protocol proxy, the step for the protocol building controller to perform the function response corresponding to the first request operation based on the BACnet protocol data further comprises the following two scenarios.

Scenarios (1): in response to the first request operation in the BACnet protocol data being an information obtaining operation, the protocol building controller searches for target device data corresponding to the target device identifier from the device data respectively corresponding to the plurality of device identifiers, and performs a response based on the target device data. The information obtaining operation comprises one of the following: searching for a bacnet device in a network, obtaining a point list of the device, reading a point property of the device, and subscribing to a point change of the device.

Scenarios (2): in response to the first request operation in the BACnet protocol data being a device control operation, the protocol building controller sends a control instruction to a target virtual BACnet device corresponding to the target device identifier based on the BACnet protocol data, to enable the target virtual BACnet device to perform the function response corresponding to the control instruction. The device control operation comprises writing the point property of the device.

The device data corresponding to each device identifier is updated by: receiving second Bip2JSON protocol data sent by the private protocol proxy, where the second Bip2JSON protocol data is a JSON text that carries a request device identifier and a second request operation and is obtained by the private protocol proxy converting private protocol data of the virtual BACnet device; and updating the device data of the virtual BACnet device corresponding to the request device identifier based on the second request operation, where the second request operation comprises one of the following: adding the virtual BACnet device, deleting the virtual BACnet device, adding a point in the virtual BACnet device, updating the point in the virtual BACnet device, and deleting the point in the virtual BACnet device.

As illustrated in FIG. 2, a full name of a B-BC module is BACnet-Building Controller, i.e., a protocol building controller. The B-BC module is a core module in this solution, which implements the function of a BACnet server that follows the conversion of other private protocols to the BACnet protocol. The B-BC module can communicate with the upper-layer application and the protocol proxy through the BIP2JSON protocol, and also can directly communicate with the third-party BACnet device or the BACnet client through the BACnet protocol.

The MQTT server is used to transmit the Bip2JSON protocol data sent by the upper-layer application to the B-BC module. If the upper-layer application needs to communicate using the BIP2JSON protocol via MQTT, the upper-layer application needs to connect to the MQTT server through an MQTT client, and then perform data interaction through a specific TOPIC.

The private protocol proxy, such as the Modbus protocol proxy, the Zigbee protocol proxy, and the KNX protocol proxy, is a module that is developed to process Various private protocol. The private protocol proxy interfaces with various private protocol devices, such as the Modbus device, the Zigbee device, and the KNX device, on a southbound side. On a northbound side, the private protocol proxy converts the protocol data to the Bip2JSON protocol and passes it to the B-BC module.

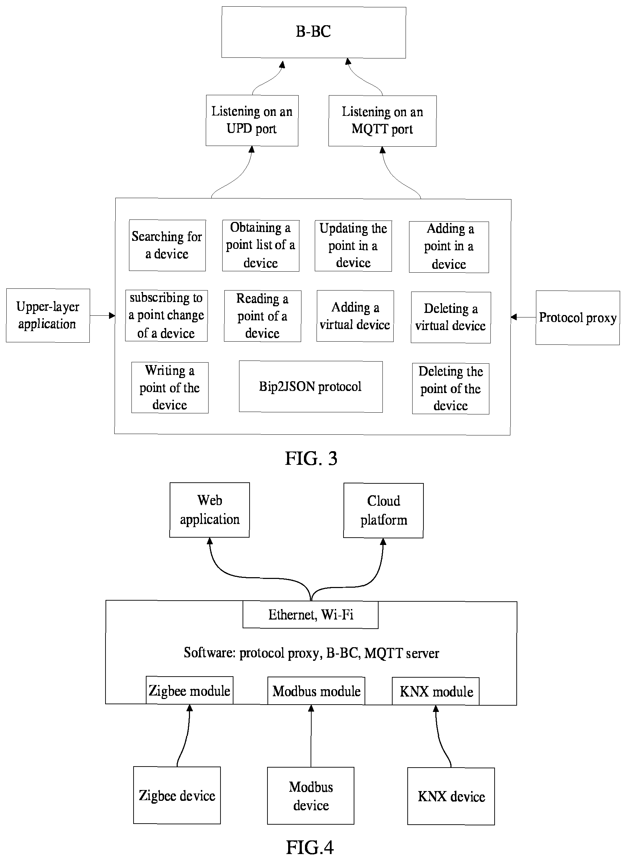

As illustrated in FIG. 3, a protocol data processing process is as follows:
After the B-BC module is started, the B-BC module begins to listen for data on an UDP port and an MQTT port. When the ports obtain a relevant function command of the Bip2JSON protocol, the B-BC module performs a corresponding response based on content requested by the command.

After a protocol proxy is started, the protocol proxy begins to query data from devices on the southbound side, add devices and points to B-BC through the Bip2JSON protocol, and continuously update through polling. In this way, the B-BC can store real-time updated device data respectively corresponding to the plurality of device identifiers, and can normally respond to queries from the BACnet client and other applications.

The upper-layer application can perform search, read, write, and subscribe operations on devices in the B-BC through the Bip2JSON protocol.

FIG 4 illustrates a specific embodiment using a computer with an embedded system as a hardware foundation. In this embodiment, the computer hardware further comprises a Modbus module, a Zigbee network module, an Ethernet module, and a Wifi module to access private protocols, and has the Ethernet module or the Wifi module as a data egress for the Bip2JSON protocol.

The computer is equipped with the B-BC module, a proxy service of each protocol, and the MQTT server as a software support for protocol conversion.

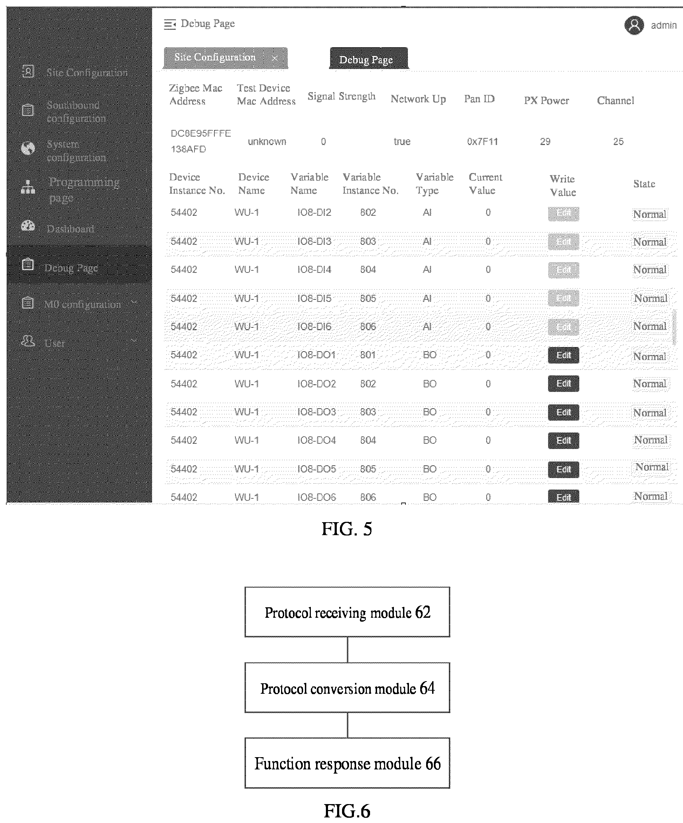

As illustrated in FIG. 5, if a user needs to check or control these devices in a building, the user can query and modify the data through the Web application (the MQTT client + the Bip2JSON protocol). In addition, connection to a cloud platform through an MQTT protocol can be established, which enables the data to be transmitted to the cloud platform.

In an implementable solution, the hardware and the software are no longer restricted to a single computer. A protocol acquisition proxy, the B-BC, and the MQTT server can be mounted on different computers and interconnected together through the network, to communicate with each other through the MQTT and the Bip2JSON.

The building protocol data processing method according to the embodiments of the present disclosure can realize the following functions: searching for the BACnet device in the network, responding to a search command in the network, obtaining the point list of the device, reading the point property of the device, writing the point property of the device, subscribing to the point change of the device, adding the virtual BACnet device, deleting the virtual BACnet device, adding the point to the BACnet device, deleting the point in the BACnet device, and updating the point in the BACnet device. The Bip2JSON protocol in the JSON format alleviates problems in the related art that the BACnet protocol has a complex structure, high access difficulty and the protocol information can only be obtained through the BACnet client. The application layer APDU of the Bip2JSON protocol has good readability and less difficulty in secondary development, achieving the "what-you-see-is-what-you-get" effect. The Bip2JSON protocol has a good connection with the internet applications, and the controller can be directly operated through the web applications, which is suitable for the needs of the modern applications.

Based on the embodiments of the above-mentioned method, an embodiment of the present disclosure further provides a building protocol data processing apparatus. The apparatus is applied to the protocol building controller. The protocol building controller is connected to the at least one upper-layer application through the MQTT server, and further connected to the at least one BACnet device. As illustrated in FIG. 6, the apparatus comprises: a protocol receiving module 62 configured to receive first Bip2JSON protocol data sent by a target upper-layer application through an MQTT server, where the first Bip2JSON protocol data is a JSON format text carrying a first request operation, a request application identifier, a target device identifier, and first point information; a protocol conversion module 64 configured to convert the first Bip2JSON protocol data to BACnet protocol data; and a function response module 66 configured to perform a function response corresponding to the first request operation based on the BACnet protocol data.

In an embodiment of the present disclosure, the protocol conversion module 64 is configured to: determine APDU application layer data based on the first request operation and the first point information in the first Bip2JSON protocol data; determine NPDU network layer data and BVLC virtual link control information based on the target device identifier in the first Bip2JSON protocol data and network layer information corresponding to the target device identifier; and determine the BACnet protocol data based on the APDU application layer data, the NPDU network layer data, and the BVLC virtual link control information.

In an embodiment of the present disclosure, the function response module 66 is configured to: in response to the target device corresponding to the target device identifier being a third-party BACnet device, send the BACnet protocol data to the third-party BACnet device, to enable the third-party BACnet device to perform the function response corresponding to the first request operation based on the BACnet protocol data; and in response to the target device corresponding to the target device identifier being a virtual BACnet device corresponding to the private protocol proxy, perform the function response corresponding to the first request operation based on the BACnet protocol data.

In an embodiment of the present disclosure, the protocol building controller caches device data respectively corresponding to a plurality of device identifiers. The function response module 66 is configured to: in response to the first request operation in the BACnet protocol data being an information obtaining operation, search for target device data corresponding to the target device identifier from the device data respectively corresponding to the plurality of device identifiers, and perform a response based on the target device data, where the information obtaining operation comprises one of the following: searching for a bacnet device in a network, obtaining a point list of the device, reading a point property of the device, and subscribing to a point change of the device; and in response to the first request operation in the BACnet protocol data being an device control operation, send a control instruction to a target virtual BACnet device corresponding to the target device identifier based on the BACnet protocol data, to enable the target virtual BACnet device to perform a function response corresponding to the control instruction, where the device control operation comprises writing the point property of the device.

In an embodiment of the present disclosure, the apparatus further comprises a data updating module configured to implement the following updating process for device data corresponding to each device identifier: receiving second Bip2JSON protocol data sent by the private protocol proxy, where the second Bip2JSON protocol data is a JSON text that carries a request device identifier and a second request operation and is obtained by the private protocol proxy converting the private protocol data of the virtual BACnet device; and updating device data of the virtual BACnet device corresponding to the request device identifier based on the second request operation, where the second request operation comprises one of the following: adding the virtual BACnet device, deleting the virtual BACnet device, adding a point in the virtual BACnet device, updating the point in the virtual BACnet device, and deleting the point in the virtual BACnet device.

In an embodiment of the present disclosure, the above-mentioned device data comprises a basic information and a data information. The basic information comprises a BACnet device identifier and a BACnet point information. The data information comprises a point current value and a point state.

In an embodiment of the present disclosure, the above-mentioned private protocol proxy comprises at least one of an Modbus protocol proxy, a Zigbee protocol proxy, and a KNX protocol proxy. The virtual BACnet device comprises at least one of an Modbus device, a Zigbee device, and a KNX device.

In an embodiment of the present disclosure, the above-mentioned upper-layer application comprises at least one of a third-party application, a Web application, a configuration application, and a protocol forwarding proxy.

The apparatus provided in the embodiments of the present disclosure has the same implementation principle and technical effects as those in the embodiments of the aforementioned method. For the sake of brief description, for matters not mentioned in the embodiments of the apparatus, reference may be made to the corresponding contents in the embodiments of the aforementioned method.

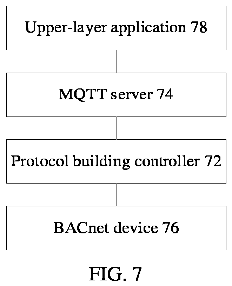

Based on the embodiments of the above-mentioned method, an embodiment of the present disclosure further provides a building protocol data processing system. As illustrated in FIG. 7, the system comprises a protocol building controller 72, an MQTT server 74, and at least one BACnet device 76. The protocol building controller 72 is connected to an upper-layer application 78 through the MQTT server 74, and further connected to the at least one BACnet device 76. The protocol building controller 72 is configured to perform the building protocol data processing method according to any one of the embodiments of the first aspect. Specific implementation can refer to the embodiments of the aforementioned method, which will not be described herein.

The system provided in the embodiments of the present disclosure has the same implementation principle and technical effects as those in the embodiments of the aforementioned method. For the sake of brief description, for matters not mentioned in the embodiments of the system, reference may be made to the corresponding contents in the embodiments of the aforementioned method.

Based on the embodiments of the above-mentioned method, an embodiment of the present disclosure further provides a computer-readable storage medium having computer-executable instructions. The computer-executable instructions, when called and executed by a processor, cause the processor to implement the building protocol data processing method according to any one of the embodiments of the first aspect. Specific implementation can refer to the embodiments of the aforementioned method, which will not be described herein.

The computer-readable storage medium provided in the embodiments of the present disclosure has the same implementation principle and technical effects as those in the embodiments of the aforementioned method. For the sake of brief description, for matters not mentioned in the embodiments of the computer-readable storage medium, reference may be made to the corresponding contents in the embodiments of the aforementioned method.

Based on the embodiments of the above-mentioned method, an embodiment of the present disclosure further provides a computer program product comprising a computer program. The computer program, when executed by a processor, implements the building protocol data processing method according to any one of the embodiments of the first aspect. Specific implementation can refer to the embodiments of the aforementioned method, which will not be described herein.

The computer program product provided in the embodiments of the present disclosure has the same implementation principle and technical effects as those in the embodiments of the aforementioned method. For the sake of brief description, for matters not mentioned in the embodiments of the computer program product, reference may be made to the corresponding contents in the embodiments of the aforementioned method.

Based on the embodiments of above-mentioned method, an embodiment of the present disclosure further provides a computer program comprising computer program code. The computer program code, when executed on a computer, causes the computer to implement the building protocol data processing method according to any one of the embodiments of the first aspect. Specific implementation can refer to the embodiments of the aforementioned method, which will not be described herein.

The computer program provided in the embodiments of the present disclosure has the same implementation principle and technical effects as those in the embodiments of the aforementioned method. For the sake of brief description, for matters not mentioned in the embodiments of the computer program, reference may be made to the corresponding contents in the embodiments of the aforementioned method.

Unless specifically stated otherwise, relative steps, numerical expressions, and numerical values of components and steps set forth in these embodiments are not intended to limit the scope of the present disclosure.

When the function is implemented in a form of software functional unit and is sold or used as a standalone product, it can be stored in a non-volatile computer-readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device (which may be a personal computer, a server, or a network device, etc.) to perform all or part of the steps of the method described in each of the embodiments of the present disclosure. The aforementioned storage medium may comprise various media capable of storing program codes, such as a Universal Serial Bus (USB) flash drive, a removable hard disk, a Read-Only Memory (ROM), a Random Access Memory (RAM), a diskette, or an optical disk.

In the description of the present disclosure, it should be understood that the orientation or the position indicated by terms such as "center", "over", "below", "left", "right", "vertical", "horizontal", "inner", and "outer" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. In addition, the terms "first", "second", and "third" are only used for descriptive purposes, and cannot be understood as indicating or implying relative importance.

Finally, it should be noted that the above-mentioned embodiments are merely specific embodiments of the present disclosure, and are used to explain the technical solutions of the present disclosure rather than to limit the present disclosure. The protection scope of the present disclosure is not limited thereto. Although the present disclosure has been described in detail with reference to the aforementioned embodiments, for those skilled in the art can still modify or easily conceive of changes to the technical solutions described in the aforementioned embodiments within the technical scope disclosed in the present disclosure, or perform equivalent replacements on part of the technical features therein. These modifications, changes or replacements do not cause the essence of corresponding technical solutions to deviate from the spirit and scope of the technical solutions of the embodiments of the present disclosure, and shall be comprised in the scope of the present disclosure. Therefore, the protection scope of the present disclosure shall be subject to the protection scope of the claims.

## Claims

1. A building protocol data processing method, the method being applied to a protocol building controller, wherein the protocol building controller is connected to at least one upper-layer application through an MQTT server, and further connected to at least one BACnet device, the method comprising:
receiving first Bip2JSON protocol data sent by a target upper-layer application through the MQTT server, wherein the first Bip2JSON protocol data is a JSON format text carrying a first request operation, a request application identifier, a target device identifier, and first point information;
converting the first Bip2JSON protocol data to BACnet protocol data; and
performing a function response corresponding to the first request operation based on the BACnet protocol data.

2. The method according to claim 1, wherein said converting the first Bip2JSON protocol data to the BACnet protocol data comprises:
determining APDU application layer data based on the first request operation and the first point information in the first Bip2JSON protocol data;
determining NPDU network layer data and BVLC virtual link control information based on the target device identifier in the first Bip2JSON protocol data and network layer information corresponding to the target device identifier; and
determining the BACnet protocol data based on the APDU application layer data, the NPDU network layer data, and the BVLC virtual link control information.

3. The method according to claim 1 or 2, wherein said performing the function response corresponding to the first request operation based on the BACnet protocol data comprises:
in response to a target device corresponding to the target device identifier being a third-party BACnet device, sending the BACnet protocol data to the third-party BACnet device, to enable the third-party BACnet device to perform the function response corresponding to the first request operation based on the BACnet protocol data; and
in response to the target device corresponding to the target device identifier being a virtual BACnet device corresponding to a private protocol proxy, performing the function response corresponding to the first request operation based on the BACnet protocol data.

4. The method according to claim 3, wherein the protocol building controller caches device data respectively corresponding to a plurality of device identifiers, and said performing the function response corresponding to the first request operation based on the BACnet protocol data comprises:
in response to the first request operation in the BACnet protocol data being an information obtaining operation, searching for target device data corresponding to the target device identifier from the device data respectively corresponding to the plurality of device identifiers, and performing a response based on the target device data, wherein the information obtaining operation comprises one of the following: searching for a bacnet device in a network, obtaining a point list of the device, reading a point property of the device, and subscribing to a point change of the device; and
in response to the first request operation in the BACnet protocol data being a device control operation, sending a control instruction to a target virtual BACnet device corresponding to the target device identifier based on the BACnet protocol data, to enable the target virtual BACnet device to perform a function response corresponding to the control instruction, wherein the device control operation comprises writing the point property of the device.

5. The method according to claim 4, wherein the device data corresponding to each of the device identifier is updated by:
receiving second Bip2JSON protocol data sent by the private protocol proxy, wherein the second Bip2JSON protocol data is a JSON text that carries a request device identifier and a second request operation and is obtained by the private protocol proxy converting private protocol data of the virtual BACnet device; and
updating device data of the virtual BACnet device corresponding to the request device identifier based on the second request operation, wherein the second request operation comprises one of the following: adding the virtual BACnet device, deleting the virtual BACnet device, adding a point in the virtual BACnet device, updating the point in the virtual BACnet device, and deleting the point in the virtual BACnet device.

6. The method according to claim 4 or 5, wherein the device data comprises basic information and data information, wherein:
the basic information comprises a BACnet device identifier and BACnet point information; and
the data information comprises a point current value and a point state.

7. The method according to any one of claims 3 to 6, wherein:
the private protocol proxy comprises at least one of an Modbus protocol proxy, a Zigbee protocol proxy, and a KNX protocol proxy; and
the virtual BACnet device comprises at least one of an Modbus device, a Zigbee device, and a KNX device.

8. The method according to any one of claims 1 to 7, wherein the upper-layer application comprises at least one of a third-party application, a Web application, a configuration application, and a protocol forwarding proxy.

9. A building protocol data processing apparatus, the apparatus being applied to a protocol building controller, wherein the protocol building controller is connected to at least one upper-layer application through an MQTT server, and further connected to at least one BACnet device, the apparatus comprising:
a protocol receiving module configured to receive first Bip2JSON protocol data sent by a target upper-layer application through the MQTT server, wherein the first Bip2JSON protocol data is a JSON format text carrying a first request operation, a request application identifier, a target device identifier, and first point information;
a protocol conversion module configured to convert the first Bip2JSON protocol data to BACnet protocol data; and
a function response module configured to perform a function response corresponding to the first request operation based on the BACnet protocol data.

10. A building protocol data processing system, the system comprising a protocol building controller, an MQTT server, and at least one BACnet device, wherein:
the protocol building controller is connected to at least one upper-layer application through the MQTT server;
the protocol building controller is further connected to the at least one BACnet device; and
the protocol building controller is configured to perform a building protocol data processing method according to any one of claims 1 to 8.

11. A computer-readable storage medium having a computer-executable instruction, wherein the computer-executable instruction, when called and executed by a processor, cause the processor to implement a building protocol data processing method according to any one of claims 1 to 8.

12. A computer program product, comprising a computer program, wherein the computer program, when executed by a processor, implements a building protocol data processing method according to any one of claims 1 to 8.

13. A computer program, comprising computer program code, wherein the computer program code, when executed on a computer, causes the computer to implement a building protocol data processing method according to any one of claims 1 to 8.
